# FASCICULE DE BREVET EUROPEEN

(11) **EP 1 288 466 B1**
(45) Date de publication et mention de la délivrance du brevet: **19.01.2005**
(21) Numéro de dépôt: 02292126.6
(22) Date de dépôt: 29.08.2002
(51) Int. Cl.: F02C 6/08

(54) **Système de prélèvement d'air d'un compresseur**
System zur Luftanzapfung in einem Verdichter
Compressor air-bleed system

(30) Priorité: 30.08.2001 FR 0111233
(43) Date de publication de la demande: 05.03.2003
(73) Titulaire: SNECMA MOTEURS, 75015 Paris (FR)
(72) Inventeur: Charon, Christophe, 77000 Vaux le Penil (FR); Cook, Graeme, 77850 Hericy (FR); Garcia, Gregory, 92160 Antony (FR); Kapala, Patrick, 77410 Villevaude (FR); Lippinois, Eric, 77000 Melun (FR); Loudet, Claude, 77950 Maincy (FR); Marois, Fabrice, 77000 Melun (FR); Pham, Lucien, 77350 Le Mee (FR); Raulin, Dominique, 77210 Avon (FR)

(56) Documents cités:
- FR-A- 2 616 890
- US-A- 4 329 114
- US-A- 5 351 478

## Description

L'invention se rapporte à un système de prélèvement d'air d'un compresseur.

Les moteurs d'aéronefs comprennent des turbines à gaz où l'air entrant dans la composition du mélange combustible est comprimé. Une portion de l'air comprimé est soutirée du compresseur pour divers usages, dont la mise sous pression de la cabine, le dégivrage et la ventilation de la turbine du moteur pour la rafraîchir.

Le soutirage de l'air comprimé se fait à travers le carter de stator, qui se compose en particulier d'une peau externe, qui apporte sa rigidité à l'ensemble, et d'une doublure interne qui délimite la veine d'écoulement de l'air et se compose essentiellement de segments annulaires assemblés entre eux dont les uns portent les aubes fixes du compresseur et les autres, qui alternent avec les précédents, s'étendent devant les aubes mobiles du rotor. Des orifices sont percés dans cette doublure pour qu'une partie de l'air s'écoulant dans la veine y entre ; si le débit à soutirer est important, ces orifices peuvent être remplacés par une fente circulaire complète. Les orifices communiquent à une cavité ménagée entre la peau externe et la doublure interne du carter, et on conçoit donc qu'il suffise de percer des orifices à travers la peau externe pour accéder à cette cavité et en soutirer l'air qui s'y est écoulé en le laissant emprunter un conduit menant là où il est demandé.

Des problèmes apparaissent toutefois quand le débit d'air soutiré doit être important. Comme la vitesse de l'écoulement d'air est limitée, le débit ne peut souvent être accru qu'en agrandissant la section offerte à l'écoulement de soutirage, à tous les endroits de cet écoulement. On peut contribuer à satisfaire à cette exigence en agrandissant les orifices traversant la doublure interne et la peau externe du carter, ainsi que le conduit d'évacuation ; mais il est impossible d'élargir les cavités intermédiaires entre la peau externe et la doublure interne, que l'air soutiré parcourt dans la direction tangentielle du moteur pour se rassembler sous l'orifice externe, car la section des cavités annulaires est déterminée par les formes qu'on doit donner à la peau externe et à la doublure interne pour d'autres raisons.

Il est donc fréquent que la section de la cavité de soutirage soit insuffisante pour permettre l'écoulement du débit d'air demandé. Il est aussi possible que la cavité ne se prête pas à un parcours commode de l'air soutiré, si elle est cloisonnée ou pour une autre raison. Une solution classique à cette difficulté consistait jusqu'à présent à disposer un tube circulaire appelé collecteur autour de la cavité, dont le rôle était de suppléer à cette cavité en offrant une section suffisante à l'écoulement annulaire d'air se rassemblant vers le conduit final de prélèvement. L'air traversait alors la cavité sensiblement radialement, en sortant par un groupe d'orifices en nombre suffisant menant à l'intérieur du collecteur. Le collecteur est cependant une pièce relativement onéreuse à fabriquer et à installer, et l'entour de carter était parfois trop encombré pour permettre de le recevoir. Une conception équivalente, exposée dans le brevet FR 2 616 890 A, consistait à remplacer le collecteur par un grand nombre de conduits distincts, raccordés chacun à un des orifices traversant la peau externe du carter. Une autre conception, représentée par le brevet US 5 351 478, est un moyen terme entre la conception précédente et une conception à conduit de soutirage unique : on préconise de disposer quatre conduits de soutirage en croix autour de la peau externe, afin de réduire le mouvement de l'air en direction tangentielle dans la cavité.

L'art antérieur fait donc connaître que le mouvement tangentiel dans la cavité peut être réduit à volonté en multipliant les orifices de prélèvement, de sorte que l'embarras causé à l'écoulement par la section de passage ou la conformation de la cavité disparaît. La ramification de l'écoulement peut cependant être jugée désavantageuse si elle est excessive en raison des contraintes de conception qu'imposent un collecteur entourant les orifices ou un grand nombre de conduits séparés de soutirage.

L'objet de l'invention est alors de permettre un soutirage d'air comprimé à travers un carter comportant une peau externe et une doublure interne et qui ne tolère qu'un débit d'air limité en son sein dans la direction tangentielle, mais où cependant une ramification excessive de l'écoulement est évitée, et le dispositif de soutirage autour du carter est simple et peu encombrant. La ramification en direction tangentielle est remplacée par une ramification combinée tangentielle et longitudinale qui permet de simplifier avantageusement le système. Une ramification axiale de l'écoulement est suggérée par le document US A-4 329 114 ; mais elle ne convient pas à des conditions de débit de prélèvement important puisque l'air est prélevé d'abord uniquement dans une des cavités; la ramification axiale n'est d'ailleurs considérée que comme une possibilité auxiliaire, un écoulement unifié d'air à travers soit l'une soit l'autre de deux cavités étant principalement envisagé, le trajet étant imposé par un clapet réglable.

L'invention concerne ainsi un système de prélèvement d'air d'un compresseur de moteur d'avion à travers une doublure d'un carter qui délimite une veine d'écoulement de l'air, comprenant des orifices perçant une peau externe de carter qui délimite une pluralité de cavités avec la doublure, l'air de prélèvement gagnant les orifices après avoir traversé la doublure, et comprenant encore des conduits de soutirage branchés sur la peau externe autour des orifices, dans lequel deux des cavités sont parcourues par l'air de prélèvement, les conduits de soutirage s'étendent par des embouchures autour de paires des orifices, les orifices de chacune des paires menant respectivement auxdites deux cavités parcourues par l'air de prélèvement. Il est original en ce que la doublure comporte une fente unique située devant des rebords délimitant les deux cavités parcourues par l'écoulement d'air et percés d'orifices d'entrée de l'air dans lesdites cavités : l'air prélevé d'un même endroit du compresseur est au même état homogène dans les deux cavités et se confond sans turbulence dans les conduits.

Ces aspects de l'invention ainsi que d'autres seront maintenant décrits plus en détail en liaison aux figures suivantes :
- la figure 1 est une vue générale représentant l'agencement de l'invention,
- la figure 2 représente le mode de soutirage en détail, et
- la figure 3 illustre la disposition des orifices dans les conduits de prélèvement.

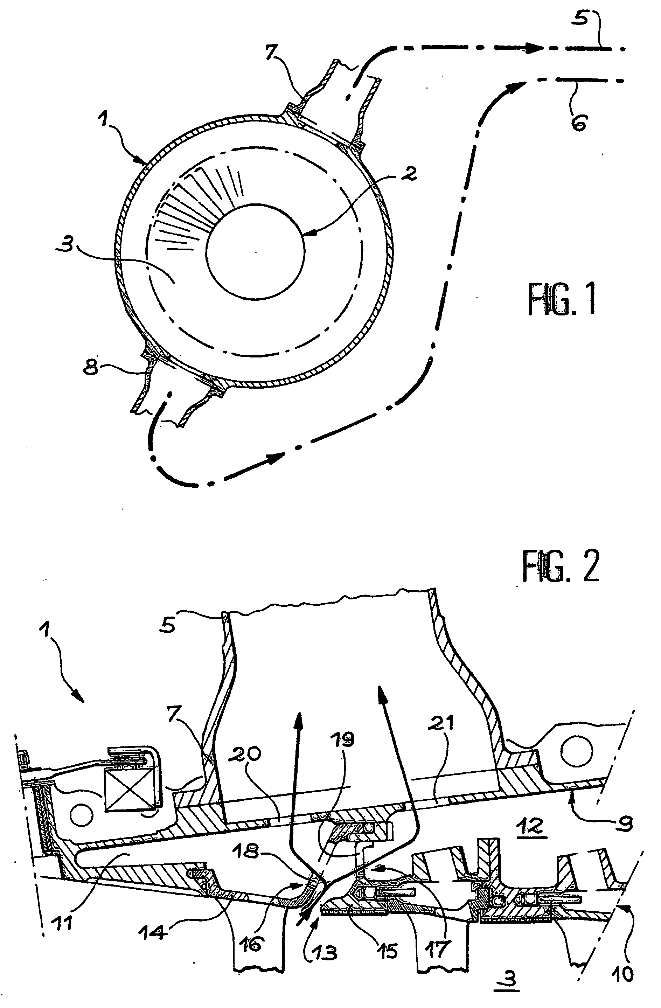

La figure 1 représente un carter 1 de compresseur séparé d'un rotor 2 concentrique par une veine 3 d'écoulement de l'air comprimé. De l'air comprimé est soutiré du compresseur par deux conduits 5 et 6 servant à une utilisation commune, comme la mise sous pression de la cabine de l'avion, et se branchant au carter 1 par deux embouchures 7 et 8 diamétralement opposées. Les conduits 5 et 6 ne se joignent pas, ou ne le font qu'à distance du carter 1.

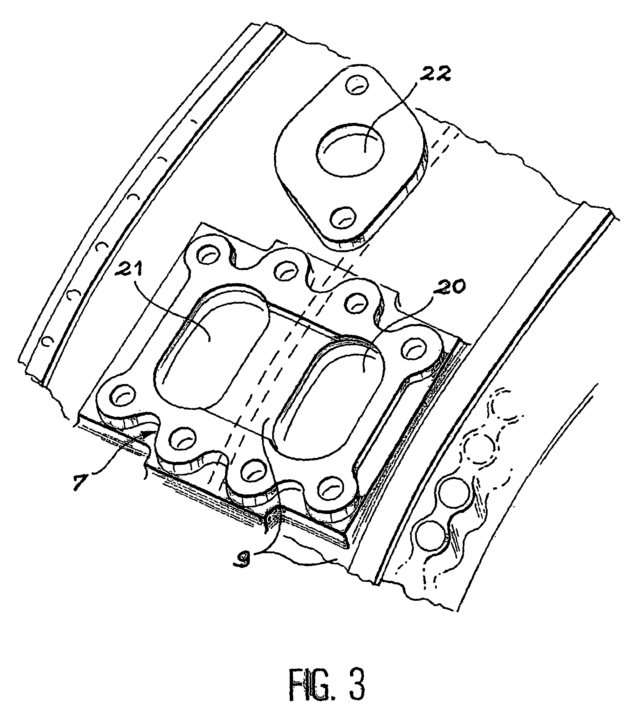

La suite de la description s'appliquant aussi bien à la région de l'embouchure 8 qu'à celle de l'embouchure 7, seule celle-ci sera décrite. Se reportant à la figure 2, on voit que le carter 1 se compose d'une peau externe 9 et d'une doublure 10 séparées par des cavités dont deux, portant les références 11 et 12, apparaissent sur les dessins. L'embouchure 7 est fixée à la peau externe 9, alors que la doublure 10 délimite la veine 3. La doublure 10 comporte des orifices, ici une fente 13 circulaire et unique, pour soutirer de l'air comprimé empruntant la veine. La fente 13 est ménagée entre un anneau redresseur 14 et un anneau de virole 15 qui font partie de la doublure 10 et se raccordent à la peau externe 9 par des rebords d'orientation plutôt radiale, portant les références respectives 16 et 17 et qui s'étendent derrière la fente 13 ; la cavité 11 s'étend derrière le rebord 16, et la cavité 12 derrière le rebord 17.

Les rebords 16 et 17 sont percés d'orifices 18 et 19 pour permettre à l'air comprimé s'étant engouffré dans la fente 13 mitoyenne aux cavités 11 et 12 d'y entrer. L'air traverse les cavités 11 et 12 et la moitié en ressort par des orifices 20 et 21 traversant la peau externe 9 pour aboutir à l'embouchure 7, l'autre moitié aboutissant de même à l'embouchure 8.

D'après la conception du document US 5 351 478 A, quatre conduits de soutirage auraient dû communiquer à la cavité 11 (par exemple) par autant d'orifices de section suffisante régulièrement répartis à angle droit. Les orifices ont été ici regroupés différemment, en deux rangées comprenant chacune un orifice 20 et un orifice 21 qui sont orientées en direction longitudinale du compresseur, chacune des rangées étant englobée par une des embouchures 7 et 8. La superficie des orifices 20 et 21 peut être la même que celle qu'on aurait prévue avec un collecteur. On peut proposer des orifices 20 et 21 de forme oblongue s'allongeant dans la direction tangentielle du compresseur, ce qui permet d'employer des embouchures 7 et 8 à section de raccordement rectangulaire et presque carrée qui se raccordent aux conduits 5 et 6, dont la section est plus petite, par une modification progressive de section, ce qui leur donne une forme générale de cloche.

L'utilisation d'une pluralité de conduits de prélèvement 5 et 6 réduit le débit d'air parcourant les cavités 11 et 12 tangentiellement pour joindre les embouchures 7 et 8, et le partage de l'écoulement de prélèvement entre les deux cavités 11 et 12 réduit encore ce débit tangentiel. On n'a ainsi plus le souci de voir le prélèvement limité par une section insuffisante des cavités 11 et 12. Un grand avantage de l'invention est aussi que le regroupement des orifices 20 et 21 par paires adjacentes sous des embouchures assez vastes permet de supprimer la moitié des conduits de soutirage des conception antérieures.

La figure 3 représente d'ailleurs d'autres orifices 22 traversant la peau externe 9 et placés sur la ligne des orifices 21, c'est-à-dire menant à la même cavité 12. Il s'agit d'orifices de prélèvement pour d'autres utilisations d'une partie de l'air comprimé soutiré par la fente 13 et ayant abouti à la cavité 12. Ainsi, la contribution conjointe des cavités 11 et 12 pour la fourniture d'air destiné à une utilisation déterminée (ici la cabine) n'exclut pas l'utilisation de ces cavités pour fournir un débit d'air additionnel destiné à d'autres utilisations.

## Revendications

1. Système de prélèvement d'air d'un compresseur de moteur d'avion à travers une doublure (10) d'un carter (1) qui délimite une veine d'écoulement de l'air, comprenant des orifices (20, 21) perçant une peau externe (9) de carter qui délimite une pluralité de cavités (11, 12) avec la doublure, l'air de prélèvement gagnant les orifices après avoir traversé la doublure, et comprenant encore des conduits de soutirage (5, 6) branchés sur la peau externe autour des orifices, dans lequel deux des cavités sont parcourues par l'air de prélèvement, les conduits de soutirage (5, 6) s'étendent par des embouchures (7, 8) autour de paires des orifices, les orifices de chacune des paires menant respectivement auxdites deux cavités parcourues par l'air de prélèvement, **caractérisé en ce que** la doublure (10) comporte une fente (13) unique située devant des rebords (16, 17) délimitant les deux cavités parcourues par l'écoulement d'air et percés d'orifices (18, 19) d'entrée de l'air dans lesdites cavités.

2. Système de prélèvement d'air selon la revendication 1, **caractérisé en ce que** les orifices (20, 21) sont oblongs, allongés en direction tangentielle du compresseur et disposés en rangées en direction longitudinale du compresseur.

3. Système de prélèvement d'air selon la revendication 2, **caractérisé en ce que** les embouchures (7, 8) s'élargissent en cloche à section presque carrée vers la peau externe.

4. Système de prélèvement d'air selon l'une quelconque des revendications précédentes, **caractérisé en ce que** les conduits (5, 6) sont deux et diamétralement opposés sur le carter.

## Patentansprüche

1. System zur Luftentnahme in einem Verdichter eines Flugzeugtriebwerks durch eine Verdopplung (10) eines Gehäuses (1) hindurch, welches eine Luftströmungsbahn umgrenzt, wobei das System durchgehende Öffnungen (20, 21) in einer Außenhaut (9) des Gehäuses aufweist, die mit der Gehäuseverdopplung zusammen eine Vielzahl von Hohlräumen (11, 12) umgrenzt, wobei die entnommene Luft die Öffnungen erreicht, nachdem sie durch die Gehäuseverdopplung gelangt ist, sowie ferner Entnahmeleitungen (5, 6) aufweist, die um die Öffnungen herum an die Außenhaut angeschlossen sind, wobei durch zwei der Hohlräume die entnommene Luft strömt, wobei die Entnahmeleitungen (5, 6) sich mittels Mundstücken (7, 8) um Paare von Öffnungen erstrecken, wobei die Öffnungen jedes dieser Paare jeweils zu einem der genannten zwei Hohlräume führt, durch die die entnommene Luft strömt,
**dadurch gekennzeichnet,**
**dass** die Gehäuseverdopplung (10) einen einzigen Schlitz (13) aufweist, der sich vor Rändern (16, 17) befindet, welche die beiden von der entnommenen Luft durchströmten Hohlräume umgrenzen und durch die Öffnungen (18, 19) für den Eintritt der Luft in die genannten Hohlräume führen.

2. System zur Luftentnahme nach Anspruch 1,
**dadurch gekennzeichnet,**
**dass** die Öffnungen (20, 21) länglich sind, sich längs in tangentialer Richtung zum Verdichter erstrecken und in Längsrichtung des Verdichters in Reihen angeordnet sind.

3. System zur Luftentnahme nach Anspruch 2,
**dadurch gekennzeichnet,**
**dass** die Mundstücke (7, 8) sich glockenförmig mit fast quadratischem Querschnitt zur Außenhaut hin erweitern.

4. System zur Luftentnahme nach einem der vorherigen Ansprüche,
**dadurch gekennzeichnet,**
**dass** die Leitungen (5, 6) zwei an der Zahl sind und einander diametral gegenüberliegend an dem Gehäuse angeordnet sind.

## Claims

1. System for bleeding air from an aircraft engine compressor through a lining (10) of a casing (1) that delimits an air flow path, comprising orifices (20, 21) made in an outer skin (9) of the casing that delimits a plurality of cavities (11, 12) with the lining, the bleed air reaching the orifices after it has crossed the lining, and additionally comprising take-off ducts (5, 6) connected to the outer skin around the orifices, in which system two of the cavities are traversed by the bleed air and the take-off ducts (5, 6) extend by way of nozzles (7, 8) around pairs of the orifices, the orifices of each of the pairs respectively leading to the said two cavities traversed by the bleed air, **characterized in that** the lining (10) has a single slit (13) situated in front of the flanges (16, 17) delimiting the two cavities traversed by the air flow, air inlet orifices (18, 19) being made in these flanges to allow air to enter the said cavities.

2. Air-bleed system according to Claim 1, **characterized in that** the orifices (20, 21) are oblong, elongated in the tangential direction of the compressor and arranged in rows in the longitudinal direction of the compressor.

3. Air-bleed system according to Claim 2, **characterized in that** the nozzles (7, 8) widen in the form of a bell with an almost square cross section towards the outer skin.

4. Air-bleed system according to any one of the preceding claims, **characterized in that** there are two ducts (5, 6) and they are diametrically opposed on the casing.
